(19) Europäisches Patentamt
European Patent Office
Office européen des brevets

(11) Numéro de publication: **0 261 019 B1**

(12) # FASCICULE DE BREVET EUROPEEN

(45) Date de publication du fascicule du brevet: **16.08.90**

(51) Int. Cl.[5]: **C02F 1/52**, C01F 7/00, C01G 49/00

(21) Numéro de dépôt: **87401998.7**

(22) Date de dépôt: **08.09.87**

(54) **Procédé de traitement des eaux.**

(30) Priorité: **19.09.86 FR 8613109**

(43) Date de publication de la demande: **23.03.88 Bulletin 88/12**

(45) Mention de la délivrance du brevet: **16.08.90 Bulletin 90/33**

(84) Etats contractants désignés: **AT BE CH DE ES FR GB IT LI LU NL**

(56) Documents cités:
**EP-A- 0 064 252**
**GB-A- 630 631**
**GB-A- 2 056 962**
**US-A- 4 362 643**

**Le dossier contient des informations techniques présentées postérieurement au dépôt de la demande et ne figurant pas dans le présent fascicule.**

(73) Titulaire: **RHONE-POULENC CHIMIE, 25, quai Paul Doumer, F-92408 Courbevoie Cédex(FR)**

(72) Inventeur: **Communal,Jean-Pierre, 15 Avenue du Docteur Meige, F-94210 La Varenne Saint Hilaire(FR)**

(74) Mandataire: **Dubruc, Philippe et al, RHONE-POULENC INTERSERVICES Service Brevets Chimie 25, quai Paul-Doumer, F-92408 Courbevoie Cédex(FR)**

**EP 0 261 019 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a trait à un procédé de traitement d'un milieu aqueux par utilisation d'agents coagulants.

On sait que les principaux appareillages destinés au traitement des eaux (eaux de surface, effluents, eaux résiduaires, eaux usées...) sont essentiellement constitués d'une part d'un clarificateur par gravité reposant sur le principe de la sédimentation, c'est à dire l'élimination des matières en suspension dans l'eau par décantation gravitaire, et d'autre part de moyens de filtration.

Le bac de décantation contient ainsi dans son fond un lit de boues et, surnageant, un effluent liquide clarifié qui s'écoule par surverse.

On a pensé depuis longtemps à utiliser divers agents coagulants susceptibles d'améliorer les conditions de sédimentation et donc la qualité des eaux traitées.

A ce titre, on peut citer le chlorure ferreux, le chlorure ferrique, le sulfate ferreux, le sulfate ferrique, le chlorosulfate ferrique.

On peut mentionner aussi les sulfates d'aluminium basiques et notamment les chlorosulfates d'aluminium basiques.

La plupart de ces produits sont efficaces. Néanmoins, ces derniers temps, une demande s'est faite sentir pour la mise au point de procédés conduisant à des teneurs résiduelles en aluminium et en matières organiques dans les eaux traitées de plus en plus faibles de manière à respecter des normes d'hygiène de plus en plus sévères. On cherche également à mettre au point des procédés dont l'utilisation soit la plus souple possible, c'est à dire des procédés pour lesquels la qualité finale de l'eau traitée serait moins dépendante des conditions de marche et de production de ce type d'installation.

Dans ce but, certains ont étudié la possibilité d'utiliser des mélanges de sels de fer et de sels d'aluminium, comme JOHNSON et AMIRTHARAJAH avec le mélange chlorure ferrique et sulfate d'aluminium ; malheureusement, la conclusion de leurs études est qu'il n'y a aucune amélioration de la coagulation dans l'utilisation de tels mélanges (cf l'article "Ferric chloride and alum as single and dual coagulants" par les auteurs précités et paru dans le numéro du mois de Mai 1984 de l'Américan Water Work Association).

Il a également été proposé dans la demande GB-A 2 056 962 de traîter des eaux résiduaires contenant des matières colorantes par oxydation à l'eau oxygénée et par coagulation-flocculation-décantation à l'aide d'un mélange de chlorosulfate d'aluminium et de sel ferrique et éventuellement d'un polyelectrolyte.

La Demanderesse a trouvé que le mode d'introduction des deux agents coagulants à une grande influence sur la teneur finale en matières organiques; plus précisement l'introduction de polymère d'aluminium dans le milieu aqueux puis avec un certain temps retard du sel ferrique permet de diminuer notablement cette teneur finale.

Un premier objet de la présente invention est donc de proposer un procédé de traitement d'une phase aqueuse permettant d'aboutir à des teneurs en aluminium résiduel très faibles.

Un second objet de l'invention est de proposer un procédé conduisant également à des teneurs finales en matières organiques dans les eaux traitées très faibles.

Un troisième objet de l'invention est de proposer un procédé permettant de traiter des milieux aqueux sur des plages de pH plus importantes, tout en maintenant des taux acceptables d'aluminium résiduel.

Dans ce but, la Demanderesse a mis au point un procédé de traitement d'un milieu aqueux, par ajout audit milieu d'au moins un polymère d'aluminium et d'au moins un sel ferrique, procédé caractérisé en ce que l'ajout du sel ferrique se fait avec un temps retart sur l'ajout du polymère d'aluminium.

La Demanderesse a en effet découvert qu'un tel procédé permet, de manière totalement inattendue et surprenante, non seulement d'atteindre des teneurs en aluminium résiduel très basses, mais aussi de parvenir à un abattement en matières organiques nettement amélioré. Enfin, le procédé selon l'invention rend possible le traitement de milieux aqueux sur une plage plus étendue de pH, ce qui augmente la souplesse de son utilisation.

Sans limiter la présente invention à la théorie, tout se passe comme si l'emploi conjugué d'un polymère d'aluminium et d'un sel ferrique permettait de limiter les mécanismes de coagulation-floculation compétitives observés dans l'art antérieur lors de mélange d'agents coagulants, et donc de mettre à profit par un véritable effet de synergie les propriétés coagulantes de chacun des agents.

La présente invention et les avantages qu'elle procure seront mieux compris à la lecture de la description et des exemples concrets mais non limitatifs qui vont suivre.

Comme polymère d'aluminium convenant pour la présente invention, on peut citer notamment les polysulfates d'aluminium, les polychlorures d'aluminium, les polychlorures basiques d'aluminium et les polychlorosulfates basiques d'aluminium.

Les polymères d'aluminium décrits ci-dessus peuvent être utilisés seuls ou en combinaison.

Cette liste n'est bien sûr donnée qu'à titre d'exemple et n'est nullement limitative, puisque tous les polymères d'aluminium bien connus de l'homme de l'art sont susceptibles de convenir pour la mise en œuvre de la présente invention.

Selon un mode préféré de réalisation de l'invention, on utilisera un polychlorosulfate basique d'aluminium. Un exemple d'un tel produit convenant particulièrement bien pour la présente invention est décrit dans la demande de brevet français FR-A 2 584 699 (EP-A 0 218 487) au nom de la Demanderesse. Le

chlorosulfate basique d'aluminium utilisé est alors caractérisé en ce qu'il comprend un produit ayant pour formule:

$Al_nOH_m(SO_4)_kCl_{3n-m-2k}$

dans laquelle la basicité ou le rapport

$$\frac{m}{3n} \times 100$$

est compris entre 40% environ et 65% environ et en ce qu'il présente un rapport équivalent Al/équivalent Cl compris entre 2,8 et 5, une masse moléculaire apparente MA mesurée par diffusion de lumière classique et des diamètres hydrodynamiques apparents ØZ et ØW mesurés par diffusion quasi-élastique de la lumière de valeurs suivantes:

MA = 7000 – 35000
ØZ (Å) = 350 – 2500
ØW (Å) = 200 – 1200.

De manière encore plus préférentielle, conviennent particulièrement bien pour la présente invention les polychlorosulfates basiques d'aluminium décrits dans la demande de brevet français précitée pour lesquels la basicité est avantageusement comprise entre 40% et 60% et plus particulièrement 45% et 56%, le rapport équivalent Al/équivalent Cl compris entre 3,2 et 4, la masse moléculaire apparente comprise entre 22000 et 32000, les diamètres hydrodynamiques Ø(Z) et Ø(W) respectivement compris entre 1500 et 2200 et entre 800 et 1100 Angström.

Le procédé de fabrication de tels produits est également indiqué dans la demande française FR-A 2 584 699.

Les sels ferriques utilisés dans la présente invention sont des produits bien connus de l'homme de l'art. Par opposition aux polymères d'aluminium précédemment décrits, il s'agit essentiellement d'espèces monomères. On peut citer notamment le sulfate ferrique, le chlorure ferrique et le chlorosulfate ferrique. Ces produits peuvent être utilisés seuls ou en mélange.

Selon un mode de réalisation préféré, on utilise du chlorosulfate ferrique.

Les meilleurs résultats sont obtenus avec un taux de sel de fer représentant 10 à 30% en poids de la quantité globale des coagulants introduits. Ceci permet de limiter au maximum une coagulation-floculation compétitive qui pourrait avoir pour effet d'entrainer une élévation du taux d'aluminium résiduel et de la consommation des réactifs, et de manière plus générale, de géner la qualité de la floculation.

On entend par temps retard, le temps séparant l'instant de l'introduction du polymère d'aluminium de l'instant de l'introduction du sel ferrique.

La mise en œuvre d'un tel temps de retard au niveau de l'introduction des agents de coagulation permet en effet de bénéficier au mieux des avantages du traitement mixte.

La Demanderesse a constaté qu'une injection de sel ferrique trop hâtive pouvait éventuellement entrainer une compétitivité entre les deux agents coagulants néfaste au traitement, alors qu'une introduction de sel de fer trop tardive pouvait géner la coagulation du sel de fer.

En tout état de cause, le choix d'un temps retard approprié permet dans tous les cas de palier à ces éventuelles difficultés. Généralement, ce temps retard est inférieur au temps nécessaire à la coagulation impartie par le polymère d'aluminium s'il était introduit seul.

Préférentiellement, et ceci afin d'obtenir les meilleurs résultats, ce temps retard est compris entre 0,6 et 0,9 fois le temps nécessaire à la coagulation impartie par le polymère d'aluminium pris seul, et de manière encore plus préférentielle compris entre 0.6 et 0.75 fois ce temps, par exemple dans le cas d'un chlorosulfate ferrique associé à un polymère d'aluminium tel que défini dans la demande de brevet français FR-A 2 584 699.

La quantité globale d'agents coagulants à introduire n'est pas critique et peut varier dans de larges limites suivant la qualité initiale du milieu aqueux traité ou la qualité finale désirée pour ledit milieu. Généralement, une quantité de quelques dizaines de grammes de produits par m³ d'eau traitée suffit.

L'utilisation à l'échelle industrielle d'un traitement mixte selon l'invention a permis d'observer une amélioration au niveau de l'abattement des matières organiques de plus de 10 %, et au niveau du taux d'aluminium résiduel de plus de 20 %, ceci par rapport à l'utilisation d'un polychlorosulfate basique d'aluminium seul. Enfin, alors qu'il est généralement nécessaire avec les produits de l'art antérieur de traiter les milieux aqueux à des pH en dessous de 8 pour obtenir une teneur acceptable en aluminium résiduel, cela n'est pas obligatoire avec le procédé de l'invention. Ceci rend donc son utilisation beaucoup plus souple.

Des exemples concrets illustrants les différents buts poursuivis par la présente invention vont maintenant être donnés.

Pour tous les essais, les conditions opératoires communes sont les suivantes :

1) l'eau traitée est une eau brute provenant de la rivière de l'Oise et présentant les caractéristiques suivantes :
- température : 9,5°C
- pH : 7,89
- titre hydrométrique : 28° français
- turbidité : 12 NTU (HACH 2100)
- teneur en matières organiques : 4,3 mg $O_2$/1 (méthode de dosage au permanganate en milieu acide)

2) Les essais jar-tests sont menés de la manière suivante :
- becher de 2 litres
- température ambiante
- régulation du pH par ajout soit d'HCl soit de NaOH
- l'ajout des coagulants se fait sous agitation rapide à 180 t/mn et le temps d'agitation imparti à chacun des coagulants est le suivant :
  . ajout de sel polymérisé d'aluminium suivi de 2'45" d'agitation rapide
  . à la fin de ces 2'45", ajout du sel ferrique monomère et l'agitation rapide est poursuivie pendant 1'15", de sorte que le temps global d'agitation rapide est de 4' et correspond à l'optimum d'énergie à dépenser pour obtenir une bonne coagulation
- agitation lente : 20' (50 t/mn)
- décantation : 15'
- filtration sur filtre nucleopore de 0,4µm
- analyse du taux d'aluminium par absorption atomique sur un appareil HEWLETT PACKARD.

3) Les agents coagulants utilisés sont les suivants :
- le polymère d'aluminium corresponde à un polychlorosulfate d'aluminium basique obtenu selon le procédé de la demande de brevet française FR-A 2 584 699; sa basicité est de 55 %, son taux de désulfatation de 82 %, et sa teneur en $Al_2O_3$ de 8,3 %
- le sel ferrique utilisé est un chlorosulfate ferrique $FeClSO_4$ de densité 1,54 et présentant une teneur en fer de 200 g/l ; ce produit est commercialisé sous le nom de marque "CLAIRTAN" par la société THANN et MUHLOUSE.

EXEMPLE 1

Cet exemple a pour but de déterminer la dose optimale d'agents coagulants à utiliser pour le traitement de la phase aqueuse.

Le jar-test est conduit avec des doses croissantes de polymère d'aluminium de 5 à 30 g/m³ d'eau traitée, dans les conditions précitées.

On note la turbidité de l'eau décantée après 15'.

TABLEAU I

| Dose polymère aluminium g/m³ | Turbidité NTU (HACH 2100) |
|---|---|
| 5 | 10 |
| 10 | 5 |
| 15 | 1,6 |
| 20 | 1,3 |
| 25 | 0,8 |
| 30 | 0,6 |

On note que la dose optimale économique de traitement s'établit aux environs de 20 g/m³ d'eau traitée.

On retiendra donc cette dose de 20 g/m³ de produit commercial à 8,3 % de matière active $Al_2O_3$ pour la suite des essais.

EXEMPLE II

Cet exemple a pour but de déterminer l'influence du temps d'introduction du sel ferrique dans la traitement du milieu aqueux.

Sur l'eau précédente, on applique un traitement de 20 ppm de coagulants répartis en 16 g/m³ de polymère d'aluminium et 4 g/m³ de sel ferrique (cette proportion est choisie après des essais d'orientation préalables).

Le temps d'agitation rapide global est de 4' et le temps $t_1$ d'agout du sel ferrique est ajusté entre 2'15" et 3'30" après l'ajout du polymère d'aluminium. Ce temps d'agitation rapide est considéré ici comme équivalent au temps nécessaire à la coagulation impartie par le polymère d'aluminium tel qui défini ci-avant dans la description.

On note la turbidité de l'eau décantée après 3′ et 15′ de manière à se rendre compte de la présence de microflocs (décantation à 3′) en cas d'éventuelle compétition entre le sel de fer et le sel d'aluminium qui pourrait nuire à la qualité de la décantation.

TABLEAU II

| Essai | Dose de polymère d'aluminium g/m$^3$ | Dose de sel ferrique | $t_1$ | $K_t = t_1$ / temps d'agitation rapide global × 100 | Turbidité NTU 3′ | 15′ |
|---|---|---|---|---|---|---|
| 1 | 20 | 0 | | | 1,60 | 1,30 |
| 2 | 16 | 4 | 2′ 15″ | 56 | 2,60 | 1,30 |
| 3 | 16 | 4 | 2′ 30″ | 62 | 2,50 | 1,25 |
| 4 | 16 | 4 | 2′ 45″ | 69 | 2,70 | 1,30 |
| 5 | 16 | 4 | 3′ | 75 | 5,20 | 1,45 |

On note que dans la plage 56%<$K_t$<70 %, la présence de microflocs qui se traduit par une trubidité de l'eau décantée à 3′ plus élevée que dans l'essai témoin n ° 1 est cependant limitée et reste compa tible avec les décanteurs couramment employés : en effet, la turbidité de l'eau décantée à 15′ présente une turbidité normale et équivalente à celle du témoin.

On constate donc qu'au taux global de 20 g/m³ d'agents coagulants avec un taux de substitution de 20 % en poids du polymère d'aluminium par le sel ferrique, les meilleurs résultats sont obtenus avec un temps $t_1$ qui doit être compris entre 55 % et 75 % du temps total imparti à la phase de coagulation, et plus préférentiellement entre 60 et 70 % de ce temps.

EXEMPLE III

Cet exemple a pour but de déterminer l'influence du taux de substitution du polymère d'aluminium par le sel ferrique sur le taux d'aluminium résiduel et le taux de matières organiques.

Le temps $t_1$ d'introduction du sel ferrique correspond à 70 % du temps total imparti à la phase de coagulation.

La dose globale d'agents coagulants utilisée est de 20 g/m³ d'eau traitée.

Les mesures du taux d'aluminium résiduel et des matières organiques se fait sur une eau décantée après 15′ puis filtrée sur nucléopores 0,4μm.

TABLEAU III

| | ESSAIS A | B | C | D | E | F | G |
|---|---|---|---|---|---|---|---|
| Dose de poymère d'aluminium | 20 | 17 | 15 | 14 | 10 | 6 | 0 |
| Dose de sel ferrique | 0 | 3 | 5 | 6 | 10 | 14 | 20 |
| % de substitution en poids | 0 | 15 | 25 | 30 | 50 | 70 | 100 |
| Taux d'aluminium résiduel en μg/1 | 140 | 110 | 110 | 100 | 75 | 60 | traces |
| Taux de matières organiques (MO) en mg $O_2$/1 | 2,90 | 2,20 | 2,30 | 2,50 | 2,60 | 2,80 | 3 |
| Consommation spécifique globale de coagulants par g de MO enlevé | 14,3 | 9,5 | 10 | 11,1 | 11,8 | 13,3 | 15,3 |

On peut noter que le taux d'aluminium résiduel est sensiblement plus bas que dans le traitement avec le polymère d'aluminium seul, quelque soit la fourchette de substitution.

Par ailleurs, le niveau des matières organiques résiduelles est très nettement amélioré dans la fourchette 15 %-50 % de taux de substitution, et plus particulièrement dans la fourchette 15-25 %, ainsi que la consommation spécifique de coagulant. Ce dernier point constitue une amélioration dans la qualité de l'eau fabriquée dans des conditions économiques d'emploi quand on sait que les problèmes de goût de l'eau, après stérilisation pour distribution, directement liés à la teneur en matières organiques résiduelles (problème lié aux propriétés gustatives des haloformes).

EXEMPLE IV

Cet exemple illustre l'influence du pH de l'eau traitée sur la teneur finale en aluminium résiduel.

La dose globale de traitement est de 20 ppm.

Le taux de substitution en sel ferrique est de 17 % et le temps retard $t_1$, pour l'introduction du sel ferrique correspond à 70 % du temps total imparti à la coagulation.

TABLEAU IV

| pH de l'eau traitée | Teneur en aluminium (ppb) de l'eau filtrée sur nucléopore 0,4 μm |
|---|---|
| 7,9 | 129 |
| 8 | 135 |
| 8,10 | 140 |
| 8,20 | 170 |
| 8,30 | 190 |

Ces valeurs montrent de manière significative qu'il existe une marge de sécurité de fonctionnement importante vis à vis de l'aluminium résiduel sur une plage relativement étendue de pH.

## Revendications

1. Procédé de traitement d'un milieu aqueux par ajout audit milieu d'au moins un polymère d'aluminium et d'au moins un sel ferrique, procédé, caractérisé en ce que l'ajout dudit sel ferrique dans le milieu se fait avec un temps retard sur l'ajout du polymère d'aluminium.

2. Procédé selon la revendication 1 caractérisé en ce que ledit temps retard est inférieur au temps nécessaire à la coagulation impartie par le polymère d'aluminium si il était introduit seul.

3. Procédé selon la revendication 2 caractérisé en ce que ledit temps retard est comprise ntre 0,6 fois et 0,9 fois le temps nécessaire à la coagulation impartie par le polymère d'aluminium si il était introduit seul.

4. Procédé selon la revendication 3 caractérisé en ce que ledit temps retard est compris entre 0,6 fois et 0,75 fois le temps nécessaire à la coagulation impartie par le polymère d'aluminium si il était introduit seul.

5. Procédé selon l'une quelconque des revendications précédentes caractérisé en ce que le polymère d'aluminium est choisi dans le groupe comprenant les polysulfates d'aluminium, les polychlorures d'aluminium, les polychlorures basiques d'aluminium et les polychlorosulfates basiques d'aluminium.

6. Procédé selon la revendication 5 caractérisé en ce que le polymère d'aluminium est un polychlorosulfate basique d'aluminium.

7. Procédé selon la revendication 6 caractérisé en ce que le polychlorosulfate basique d'aluminium comprend un produit ayant pour formule:

$Al_nOH_m(SO_4)_kCl_{3n-m-2k}$

dans laquelle la basicité ou le rapport

$$\frac{m}{3n} \times 100$$

est compris entre 40% environ et 65% environ et en ce qu'il présente un rapport équivalent Al/équivalent Cl compris entre 2,8 et 5, une masse moléculaire apparente MA mesurée par diffusion de lumière classique et des diamètres hydrodynamiques apparents ØZ et ØW mesurés par diffusion quasi-élastique de la lumière de valeurs suivantes:

MA = 7000–35000
ØZ (Å) = 350–2500
ØW (Å) = 200–1200.

8. Procédé selon la revendication 7 caractérisé en ce que la basicité est comprise entre 40% et 60%, plus particulièrement entre 45% et 56%, le rapport équivalent Al/équivalent Cl compris entre 3,2 et 4 et en ce que:

MA = 22000–32000
ØZ(Å) = 1500–2200
Ø(W)(Å) = 800–1100

9. Procédé selon l'une quelconque des revendications précédentes caractérisé en ce que le sel ferrique est choisi dans le groupe comprenant les sulfates ferriques, les chlorures ferriques, et les chlorosulfates ferriques.

10. Procédé selon la revendication 9 caractérisé en ce que le sel ferrique est un chlorosulfate ferrique.

11. Procédé selon l'une quelconque des revendications précédentes caractérisé en ce que la teneur en sel ferrique est comprise entre 10 et 30% en poids par rapport à la quantité globale d'agents coagulants introduits dans le milieu.

**Claims**

1. Process for the treatment of an aqueous medium by the addition thereto of at least one aluminium polymer and at least one ferric salt, characterized in that the addition of the said ferric salt to the medium takes place with a delay time compared with the addition of the aluminium polymer.

2. Process according to claim 1, characterized in that said delay time is less than the time necessary for the coagulation resulting from the aluminium polymer if introduced alone.

3. Process according to claim 2, characterized in that said delay time is between 0.6 and 0.9 times the time necessary for the coagulation resulting from the aluminium polymer if introduced alone.

4. Process according to claim 3, characterized in that said delay time is between 0.6 and 0.75 times the time necessary for the coagulation resulting from the aluminium polymer if introduced alone.

5. Process according to any one of the preceding claims, characterized in that the aluminium polymer is chosen from the group including aluminium polysulphates, aluminium polychlorides, basic aluminium polychlorides and basic aluminium polychlorosulphates.

6. Process according to claim 5, characterized in that the aluminium polymer is a basic aluminium polychlorosulphate.

7. Process according to claim 6, characterized in that the basic aluminium polychlorosulphate comprises a product with the formula:

$A_nOH_m(SO_4)_kCl_{3n-m-2k}$

in which the basicity or ratio

$$\frac{m}{3n} \times 100$$

is between approximately 40% and approximately 65% and in that it has an equivalent Al/equivalent Cl ratio between 2.8 and 5, an apparent molecular mass MA measured by standard light diffusion and apparent hydrodynamic diameters ØZ and ØW measured by quasi-elastic light diffusion with the following values:

MA = 7000 – 35000
ØZ (Å) = 350 – 2500
ØW (Å) = 200 – 1200

8. Process according to claim 7, characterized in that the basicity is between 40 and 60%, more particularly between 45 and 56% and the equivalent Al/equivalent Cl ratio is between 3.2 and 4 and in that:

MA = 22000 – 32000
ØZ (Å) = 1500 – 2200
Ø(W) (Å) = 800 – 1100

9. Process according to any one of the preceding claims, characterized in that the ferric salt is chosen from the group including ferric sulphates, ferric chlorides and ferric chlorosulphates.

10. Process according to claim 9, characterized in that the ferric salt is a ferric chlorosulphate.

11. Process according to any one of the preceding claims, characterized in that the ferric salt content is between 10% and 30% by weight based on the total coagulating agent quantity introduced into the medium.

## Patentansprüche

1. Verfahren zur Behandlung eines wäßrigen Mediums, wobei man zu dem wäßrigen Medium mindestens ein Aluminiumpolymer und mindestens ein Eisen-III-Salz zusetzt, dadurch gekennzeichnet, daß die Zugabe des Eisen-III-Salzes zu dem Medium erfolgt, nachdem nach der Zugabe des Aluminiumpolymers eine Zeit vergangen ist.

2. Verfahren nach Anspruch 1, dadurch gekennzeichnet, daß die vergangene Zeit geringer ist als die Zeit, die erforderlich ist für die durch das Aluminiumpolymer hervorgerufene Koagulation, wenn dieses allein zugesetzt würde.

3. Verfahren nach Anspruch 2, dadurch gekennzeichnet, daß die Zeit zwischen dem 0,6-fachen und dem 0,9-fachen der Zeit liegt, die erforderlich ist für die durch das Aluminiumpolymer hervorgerufene Koagulation, wenn dieses allein zugesetzt würde.

4. Verfahren nach Anspruch 3, dadurch gekennzeichnet, daß die Zeit zwischen dem 0,6-fachen und dem 0,75-fachen der Zeit liegt, die erforderlich ist für die durch das Aluminiumpolymer hervorgerufene Koagulation, wenn dieses allein zugesetzt würde.

5. Verfahren nach einem der vorangehenden Ansprüche, dadurch gekennzeichnet, daß das Aluminiumpolymer ausgewählt ist aus der Gruppe, umfassend die Aluminiumpolysulfate, die Aluminiumpolychloride, die basischen Aluminiumpolychloride und die basischen Aluminiumpolychlorsulfate.

6. Verfahren nach Anspruch 5, dadurch gekennzeichnet, daß das Aluminiumpolymer ein basisches Polychlorsulfat ist.

7. Verfahren nach Anspruch 6, dadurch gekennzeichnet, daß das basische Aluminiumpolychlorsulfat ein Produkt enthält der Formel

$Al_nOH_m(SO_4)_kCl_{3n-m-2k}$,

in der die Basizität oder das Verhältnis

$$\frac{m}{3n} \times 100$$

zwischen etwa 40% und etwa 65% liegt, und daß es ein Verhältnis von Al-Äquivalent zu Cl-Äquivalent zwischen 2,8 und 5 aufweist, eine scheinbare Molekularmasse MA, gemessen durch klassische Lichtstreuung, und die scheinbaren hydrodynamischen Durchmesser ⌀Z und ⌀W, gemessen durch quasi elastische Streuung des Lichtes, die folgenden Werte besitzen:

MA = 7000 – 35000
⌀Z (Å) = 350 – 2500
⌀W (Å) = 200 – 1200

8. Verfahren nach Anspruch 7, dadurch gekennzeichnet, daß die Basizität zwischen 40 und 60%, insbesondere zwischen 45 und 56% liegt, das Verhältnis Al-Äquivalent zu Cl-Äquivalent zwischen 3,2 und 4 liegt und daß:

MA = 22000 – 32000
⌀Z (Å) = 1500 – 2200
⌀(W)(Å) = 800 – 1100
ist.

9. Verfahren nach einem der vorangehenden Ansprüche, dadurch gekennzeichnet, daß das Eisen-III-Salz ausgewählt ist aus der Gruppe, umfassend die Eisen-III-sulfate, die Eisen-III-chloride und die Eisen-III-chlorsulfate.

10. Verfahren nach Anspruch 9, dadurch gekennzeichnet, daß das Eisen-III-Salz ein Eisen-III-chlorsulfat ist.

11. Verfahren nach einem der vorangehenden Ansprüche, dadurch gekennzeichnet, daß der Gehalt an Eisen-III-Salz zwischen 10 und 30 Gew.-%, bezogen auf die Gesamtmenge der Koagulationsmittel, die in das Medium eingeführt werden, liegt.